# EUROPÄISCHE PATENTSCHRIFT

(11) **EP 0 770 944 B1**
(45) Veröffentlichungstag und Bekanntmachung des Hinweises auf die Patenterteilung: **24.02.1999**
(21) Anmeldenummer: 96116746.7
(22) Anmeldetag: 18.10.1996
(51) Int. Cl.: G05B 23/02, G05B 13/02

(54) **Verfahren zur automatisierten Generierung von leittechnischen Strukturen**
Method for the automated generation of control structures of technical processes
Procédé pour la génération automatique des structures de contrôle des procédés industriels

(30) Priorität: 24.10.1995 DE 19539480
(43) Veröffentlichungstag der Anmeldung: 02.05.1997
(73) Patentinhaber: ABB PATENT GmbH, 68309 Mannheim (DE)
(72) Erfinder: Vollmer, Gerhard, 69181 Leimen (DE); Wilhelm, Georg, 68723 Schwetzingen (DE); Schachinger, Rudolf, 68309 Mannheim (DE)
(74) Vertreter: Rupprecht, Klaus, Dipl.-Ing.

(56) Entgegenhaltungen:
- EP-A- 0 384 910
- EP-A- 0 626 697

## Beschreibung

Die Erfindung bezieht sich auf ein Verfahren zur automatisierten Generierung von leittechnischen Strukturen für eine konkrete leittechnische Aufgabe.

Das Generieren von leittechnischen Strukturen ist als Teil eines Planungssystems aufzufassen, wobei für einen konkreten Prozeß oder Teilprozeß, z.B. für das Speisewassersystem einer Kraftwerksanlage,
a) ein verfahrenstechnisches Schema zu erstellen ist,
b) leittechnische Strukturen zu generieren sind,
c) Regelkreise zu generieren sind und
d) eine meßtechnische Auslegung vorzunehmen ist.

Das hier behandelte Verfahren zur Generierung leittechnischer Strukturen setzt auf einem gegebenen verfahrenstechnischen Schema auf, das hierarchisch in Baugruppen strukturiert ist. Das Schema und die Baugruppen beinhalten einzelne verfahrenstechnische Komponenten, z.B. Kreiselpumpe oder Absperrschieber, die miteinander mit Leitungen verbunden sind. Die Leitungen sind mit einer Richtungsinformation versehen, die die Flußrichtung des Prozeßmediums, z.B. Dampf, beinhaltet. Jede Komponente des Schemas besitzt einen Datensatz, der die zugehörigen Eigenschaften beschreibt, z.B. die Eigenschaft Meßart einer Messung = Druckmessung.

Für die Baugruppen, Komponenten oder aber für das ganze Schema sind leittechnische Aufgaben formuliert. Die in den leittechnischen Aufgaben beinhalteten Suchanfragen enthalten Verweise auf die Komponenten des Schemas, die bei der Suchanfrage als Start- bzw. Endkomponenten herangezogen werden. Diese Verweise sind Bestandteil der Komponenten-Datensätze. Ein verfahrenstechnisches Schema, das die genannten Eigenschaften aufweist, kann beispielsweise nach dem in der korrespondierenden europäischen Patentanmeldung "Verfahren zum automatischen Erstellen eines verfahrenstechnischen Schemas", Veröffentlichungsnummer EP 0 770 945 A1 beschriebenen Verfahren bereitgestellt werden.

Die auf ein solches verfahrenstechnisches Schema bezogenen leittechnischen Aufgaben müssen für eine anschließende prozeßleittechnische Realisierung aufbereitet werden. Dabei werden die leittechnischen Aufgaben dem verfahrenstechnischen Schema angepaßt und anschließend entsteht eine auf konkrete verfahrenstechnische Komponenten bezogene leittechnische Struktur. Sie beinhaltet alle Bedingungen, die für einen automatisierten Betrieb von Teilanlagen oder Gesamtanlagen, z.B. Kraftwerken, erforderlich sind. Solche Bedingungen sind z.B. Meßwerte für Freigabe/Schutz zum Schalten/Abschalten von Aggregaten.

Bisher werden die benötigten leittechnischen Strukturen der leittechnischen Automatisierungsaufgaben von Planern oder Planungsteams durch aufwendige Erfassung und Umsetzung von Anforderungen des in verfahrenstechnischen Unterlagen beschriebenen technischen Prozesses, unter Beachtung von Planungsrichtlinien, z.B. VGB (Vereinigung der Großkraftwerksbetreiber), erstellt. Die Ergebnisse werden entweder unabhängig vom konkreten Prozeßleitsystem formuliert oder direkt mit Mitteln eines konkreten Prozeßleitsystems realisiert. Die Möglichkeit einer direkten variablen wiederholten Nutzung dieser Daten (also der Arbeitsergebnisse) ist in beiden Fällen nicht gegeben.

Diese Vorgehensweise erfordert in jedem Projekt einen intensiven und zeitaufwendigen Einsatz von hochqualifizierten Planungsingenieuren; die Qualität der Ergebnisse ist vom jeweiligen Planer abhängig und läßt sich nur stichprobenweise prüfen.

Es entsteht somit Bedarf an einem variablen und rationellen Verfahren zur Generierung leittechnischer Strukturen, das zugleich zu qualitativ besseren und besser prüfbaren Ergebnissen führt.

Der Erfindung liegt daher die Aufgabe zugrunde, ein Verfahren anzugeben, das eine automatisierte Generierung von leittechnischen Strukturen ermöglicht.

Diese Aufgabe wird gelöst durch ein Verfahren mit den in Anspruch 1 angegebenen Merkmalen zum automatisierten Generieren von leittechnischen Strukturen. Vorteilhafte Ausgestaltungen sind in weiteren Ansprüchen angegeben und den weiter unten beschriebenen Ausführungsbeispielen zu entnehmen.

Die erfindungsgemäße Generierung von leittechnischen Strukturen hat eine Reihe von Vorteilen : Die Produktivität wird erhöht, die Planungszeit verkürzt, die Qualität und die Prüfbarkeit verbessert. Die nach dem Verfahren erstellten leittechnischen Strukturen sind anwendbar im Rahmen eines umfangreichen Planungssystems für Kraftwerksleitsysteme. Das Verfahren generiert reproduzierbare Ergebnisse, d.h. für das gleiche verfahrenstechnische Schema ergibt sich in jedem Fall die gleiche leittechnische Struktur. Die Ergebnisdaten sind vom konkreten Prozeßleitsystem unabhängig und können anschließend zu einem konkreten Prozeßleitsystem transferiert und in produkt- oder herstellerspezifische Lösungen - auch automatisiert - umgesetzt werden.

Die automatisierte Generierung von konkreten leittechnischen Strukturen, z.B. von Prozeßkriterien für einen bestimmten Antrieb einer Pumpe, basiert auf einem Expertensystem und erfolgt unter Verwendung einer abstrakt formulierten Vorgabe, die an alle beabsichtigten, zulässigen oder denkbaren Anlagenvarianten anpassungsfähig ist. Die zur Konkretisierung erforderliche Anpassung der leittechnischen Strukturen erfolgt automatisiert anhand des vorgegebenen verfahrenstechnischen Schemas.

Ein Expertensystem kann nicht nur wie herkömmliche Programme Daten nach einer vorgefertigten Befehlsfolge verändern, sondern auch einen Satz von vorgegebenen Regeln auf einen Datenbestand anwenden. Das Expertensystem wählt die gültigen Regeln selbständig aus und wendet sie an, bis es ein Ergebnis erreicht, das alle geltenden Regeln erfüllt. Dabei wird eine feste Vorgehensweise und ein festes Regelwerk verfolgt, so daß die Ergebnisse immer reproduzierbar und nachvollziehbar begründet sind.

Die Aufgaben der Prozeßleittechnik bestehen zum großen Teil aus der automatischen Ansteuerung und Überwachung der einzelnen verfahrenstechnischen Komponenten, wie z.B. Kreiselpumpe, Behälter usw., die in einem verfahrenstechnischen Schema angeordnet sind. Das Wissen der Automatik und Überwachung von Komponenten wird abstrakt in einer Wissensbasis erfaßt, die hier weiter als Generix bezeichnet ist. Der Begriff Generix wird auch in der Mehrzahl Generixe verwendet, weil das erfaßte Wissen zeilenweise (eine Zeile entspricht einem Generix) erfaßt wird. Generix ist ein Kunstwort aus generieren und Wissensmatrix.

In den abstrakten Generixen werden Schutz, Freigaben, Automatikbefehle und Prozeßstörmeldungen allgemeingültig formuliert und abgelegt. Zum Beispiel kann an einer Rohrleitung mit Druckmessung festgelegt werden, daß bei P > Max alle vorgeschalteten Pumpen Schutz-abgeschaltet werden müssen. Erst wenn die Komponenten in einem konkreten verfahrenstechnischen Schema verwendet werden, werden die im Generix enthaltenen abstrakten Formulierungen bei der automatisierten Generierung von leittechnischen Strukturen mit Hilfe von Regeln in konkrete Kriterien umgesetzt.

Die Generixe sind tabellarisch gestaltet und erfassen in jeder Zeile eine allgemeingültig formulierte Aufgabe, die aus Einträgen für Wirkungsort, Verarbeitung, leittechnischer Bedingung und dem Zustand der Bedingung besteht.

Wirkungsort
ist eine oder sind mehrere Komponenten, auf welche die leittechnische Bedingung wirken soll. Zum Beispiel Pumpe 1 oder alle Pumpen vor der Druckmessung (vor P-Messung).

Verarbeitung
bestimmt die Wirkung der leittechnischen Bedingung, z.B. Freigabe zum Einschalten (FE) oder Schutz-Aus (SA).

Leittechnische Bedingung
ist in der Regel ein verfahrenstechnisches Kriterium, z.B. ,,Druckmessung" oder "alle Schieber vor Pumpe"

Zustand
bestimmt den Auslösezustand der leittechnischen Bedingung, z.B. "> hoch" oder "auf".

Für die abstrakten Inhalte der Einträge "Wirkungsort" und "leittechnische Bedingung" ist eine allgemeingültige Formulierung als eine Suchvorschrift (alle ..,vor..,nächste ..,Strang Nr. ..) möglich. Die Vorgabe löst entsprechend einen Suchvorgang im konkreten verfahrenstechnischen Schema, z.B. entlang der mit Flußrichtung markierten Verbindungen zwischen den Komponenten, aus. Dadurch passen sich die leittechnischen Strukturen einem konkreten verfahrenstechnischen Schema an.

Das Verfahren zur automatisierten Generierung von konkreten leittechnischen Strukturen wird nachstehend anhand eines in den Zeichnungsfiguren dargestellten Ausführungsbeispiels weiter erläutert.
Es zeigt
- Fig. 1a: Übersichtsdarstellung zur automatisierten Generierung von leittechnischen Strukturen; Ergebnisse sind konkrete Generixe;
- Fig. 1b: Übersichtsdarstellung zur Vorgehensweise bei der Erzeugung von Funktionsplänen auf der Grundlage der konkreten Generixe;
- Fig. 2: leittechnische Strukturen generieren,
- Fig. 3: Ermitteln des jeweiligen Wirkungsortes einer Generixzeile,
- Fig. 4: Ermitteln der zu einer Generixzelle gehörenden leittechnischen Bedingung;
- Fig. 5: verschachtelte Logik.

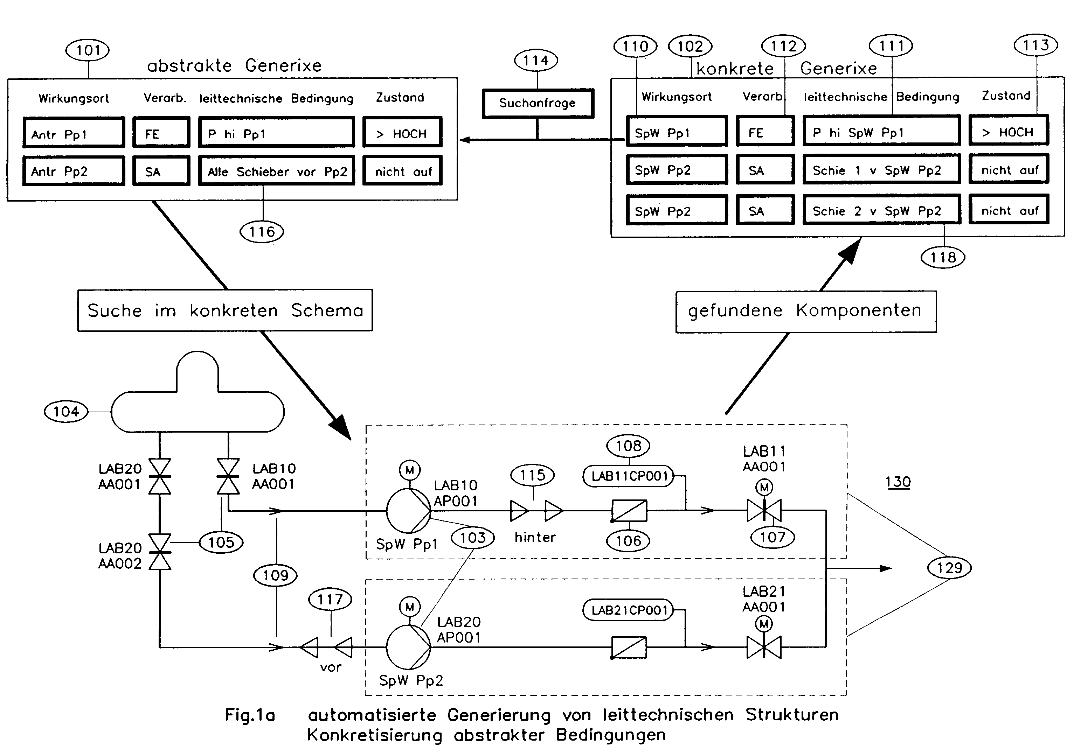

In Fig. 1a ist die verfahrensgemäße Vorgehensweise für die Konkretisierung der abstrakten Bedingungen in einer Gesamtübersicht dargestellt. Die als abstrakte Generixe 101 bezeichnete Wissensbasis ist im linken Teil der Fig. 1a dargestellt und im rechten Teil die, wie weiter beschrieben, erzeugten konkreten Generixe 102. Ein konkretes verfahrenstechnisches Schema 130 mit Komponenten, auf die sich die Generixe beziehen, ist im unteren Teil der Fig. 1a gezeigt..

Das Schema stellt in vereinfachter Form ein Speisewassersystem dar, das z.B. in einem Kraftwerk den Wasser/Dampf-Kreislauf versorgt. Die - in der Regel redundanten - Speisewasserpumpen 103 fördern das Speisewasser vom Speisewasserbehälter 104 durch die Absperrschieber 105 der Saugleitung, dann weiter hinter den Pumpen durch Rückschlagklappen 106 und druckseitige Absperrschieber 107 in den Wasser/Dampf-Kreislauf der Anlage. Hinter den Rückschlagklappen 106 ist jeweils eine Druckmessung 108, die zur Betriebsüberwachung der Pumpen erforderlich ist, angebracht. Die Pfeile 109 an den Rohrleitungen deuten die Flußrichtung der Medien (Speisewasser) an.

Von den abstrakten Generixen 101 wird zur Konkretisierung eine Kopie angelegt, die zeilenweise bearbeitet wird, wodurch die konkreten Generixe 102 entstehen. Die abstrakten Vorgaben für Wirkungsort 110 und leittechnische Bedingungen 111 werden dabei konkretisiert, die Einträge für Verarbeitung 112 und Zustand 113 bleiben unverändert.

Die Suche des Wirkungsortes beginnt mit der Suchanfrage 114 nach den Start- und Endkomponenten mit Hilfe der, in der abstrakten Generix 101 abgelegten abstrakter Formulierung. Die Start- und Endkomponenten der Suchanfrage bestimmen die Strecke, in der sich die gesuchte Komponente im konkreten Schema befindet, und durch weitere Merkmale, z.B. "die Komponente ist eine Kreiselpumpe" identifiziert werden kann.

Der Wirkungsort 110 ist in diesem Beispiel durch die abstrakte Hauptkomponente "Antr. Pp1" (Antrieb der Pumpe 1), die der gesuchten Startkomponente entspricht, vorgegeben. Die gefundene konkrete Komponente wird in die konkrete Generix mit der aktuellen Bezeichnung, z.B. "SpW Pp 1" (Speisewasserpumpe 1) aufgenommen.

Für die leittechnische Bedingung 111 "P hi Pp1" (Druckmessung hinter Pumpe 1) beginnt die Suche im konkreten verfahrenstechnischen Schema an der Pumpe Pp1 in Flußrichtung 115 bis die erste Druckmessung 108 als Endkomponente erfaßt wird.

Eine weitere Variante der Suchroutinen ist in der zweiten abstrakten Generixzeile (vergl. 101) für die leittechnische Bedingung 116 "alle Schieber vor Pp2" vorgegeben. In diesem Fall beginnt die Suche im konkreten Schema 130 an der Pumpe Spw Pp2 gegen die Flußrichtung 117 und erfaßt alle (zwei) Schieber in der Verbindung bis zu einem Behälter, hier SpW-Behälter 104, oder Sammelschiene, die für diese Suchregel als Endkomponenten gelten. Für jede gefundene Bedingung wird eine konkrete Generixzeile benötigt, d.h. in diesem Fall wird zusätzlich eine neue Zeile mit gleichem Inhalt angelegt und die zweite Bedingung 118 ,,Schieber 2 v SpW Pp2" aufgenommen.

Die erzeugten konkreten Generixe 102 sind als die zu erzeugenden leittechnischen Strukturen anzusehen. Die so in Form von Datensätzen vorliegenden leittechnischen Strukturen lassen sich als Basis für unterschiedliche Darstellungsformen, insbesondere für Funktionspläne verwenden.

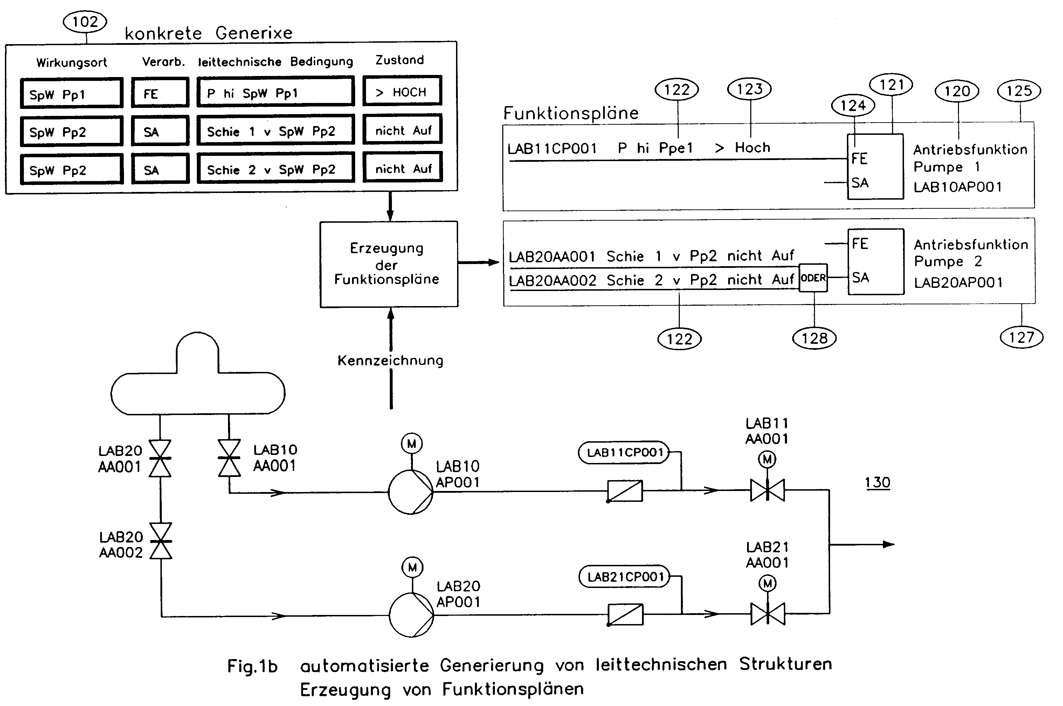

In Fig. 1b ist die verfahrensgemäße Vorgehensweise für die Erzeugung von Funktionsplänen in einer Gesamtübersicht dargestellt. Als Datenquelle dienen die, nach Fig. 1a fertiggestellten konkreten Generixe 102.

Die Leitsystem-neutralen Funktionspläne fassen in typischer Weise die leittechnischen Aufgaben pro Antriebfunktion 120 (Wirkungsort) zusammen. Hinzu kommen noch übergeordnete leittechnische Funktionen, wie z.B. Vorwahl oder Funktionsgruppe, die auf gleiche Art behandelt werden. Die Funktionspläne bestehen jeweils aus einem komplexen Funktionsbaustein 121, z.B. für gesteuerte Antriebsfunktion, auf den die leittechnischen Bedingungen 122 mit dem Zustand 123 zur Verarbeitung 124 aufgeschaltet werden.

Der Funktionsplan mit Bezugszeichen 125 wird je Wirkungsort 110 angelegt und es wird entsprechend der verfahrenstechnischen bzw. funktionellen Merkmale der Funktionsbaustein 121 abgeleitet. Danach werden die konkreten leittechnischen Bedingungen 122 nach den Vorgaben für Verarbeitung 124 und Zustand 123 aufgeschaltet. Die Kennzeichnungen, z.B. KKS (Kraftwerkskennzeichnungssystem), werden aus dem verfahrenstechnischen Schema 130 ermittelt.

Bei der Erzeugung des als zweite Variante aufgeführten Funktionsplanes 127 werden die im Beispiel gefundenen leittechnischen Bedingungen 122 (zwei Schieber) über eine ODER-Funktion 128, die anhand der leittechnischen Regeln für Mehrfachbelegung von Eingängen der Antriebsfunktionen aufgerufen wird, aufgeschaltet.

Zum besseren Verständnis der weiteren Ausführungen ist hervorzuheben, daß das in den Figuren 1a und 1b gezeigte konkrete verfahrenstechnische Schema 130 hierarchisch in Baugruppen 129 strukturiert ist, wobei die Baugruppen 129 jeweils mehrere Komponenten z.B. 103, 106, 107 enthalten können. Eine solche Baugruppen-Hierarchie ist in der korrespondierenden Patentanmeldung "Verfahren zum automatischen Erstellen eines verfahrenstechnischen Schemas", Veröffentlichungsnummer EP 0 770 945 A1 dargestellt.

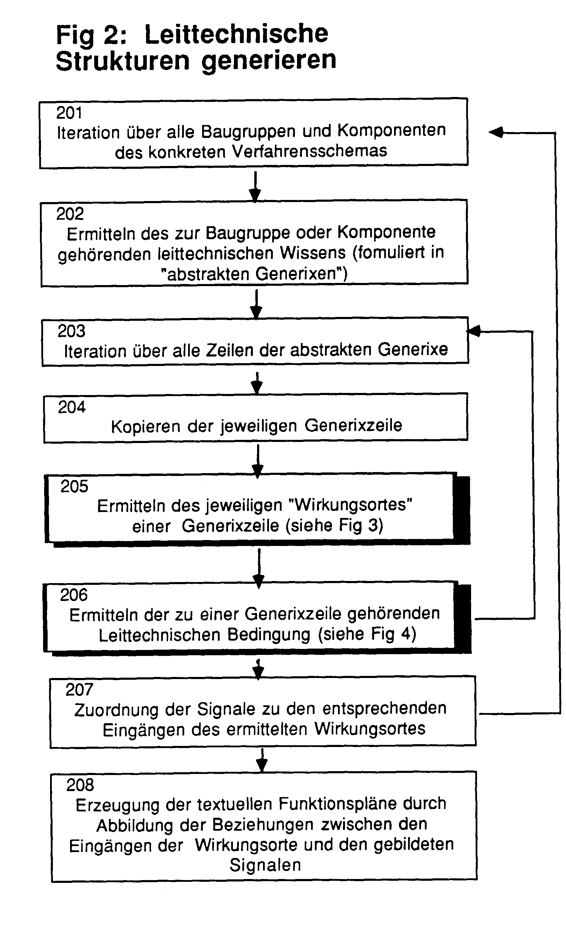

Anhand der Fig. 2 bis 5 wird der Ablauf des Verfahrens zur Generierung leittechnischer Strukturen ausführlicher beschrieben.

Der in Fig. 2 mit dem Bezugszeichen 201 versehene Bearbeitungsschritt ermittelt alle Baugruppen und Komponenten eines konkreten verfahrenstechnischen Schemas und eröffnet eine Iteration über diese Baugruppen und Komponenten. In dem mit 202 bezeichneten Bearbeitungsschritt wird auf das zu der entsprechenden Baugruppe oder Komponente formulierte Wissen zugegriffen (vgl. abstrakte Generixe 101 in Fig. 1a). Daraufhin werden in den mit 203 und 204 bezeichneten Arbeitsschritten alle Generixzeilen des abstrakten Generix kopiert. In dem mit 205 bezeichneten Bearbeitungsschritt wird der Wirkungsort aus der abstrakten Beschreibung konkretisiert.

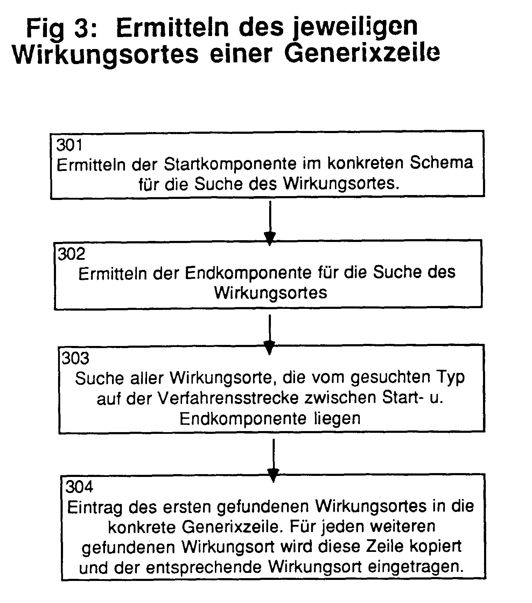

In Fig. 3. wird das Verfahren zur Ermittlung der Wirkungsorte (Konkretisieren) detaillierter dargestellt.

In dem mit dem Bezugszeichen 301 versehenen Bearbeitungsschritt wird die Startkomponente der Suchanfrage ermittelt. In der abstrakten Formulierung der Startkomponente ist ein Verweis auf eine Komponente im Verfahrensschema enthalten. Diese Komponente stellt die gesuchte Startkomponente dar. Ist für die Suchanfrage eine Endkomponente vorgesehen, so wird diese in dem mit 302 bezeichneten Verarbeitungsschritt nach dem gleichen Verfahren ermittelt, das schon bei der Suchanfrage der Startkomponente verwendet wird. In dem mit 303 bezeichneten Bearbeitungsschritt wird die Verfahrensstrecke zwischen Start- und Endkomponente nach Komponenten durchsucht, die dem in der Suchanfrage spezifizierten Typ, z.B. Stelleinrichtung, entsprechen. In dem mit 304 bezeichneten Bearbeitungsschritt wird der gefundene Wirkungsort in die konkrete Generixzeile d.h. in die Kopie der entsprechenden abstrakten Generixzeile eingetragen. Werden mehrere Wirkungsorte gefunden, z.B. bei der Suchanfrage 'Alle Schieber zwischen A und B', so wird zu jedem weiteren Wirkungsort eine konkrete Generixzeile kopiert und der entsprechende Wirkungsort eingetragen.

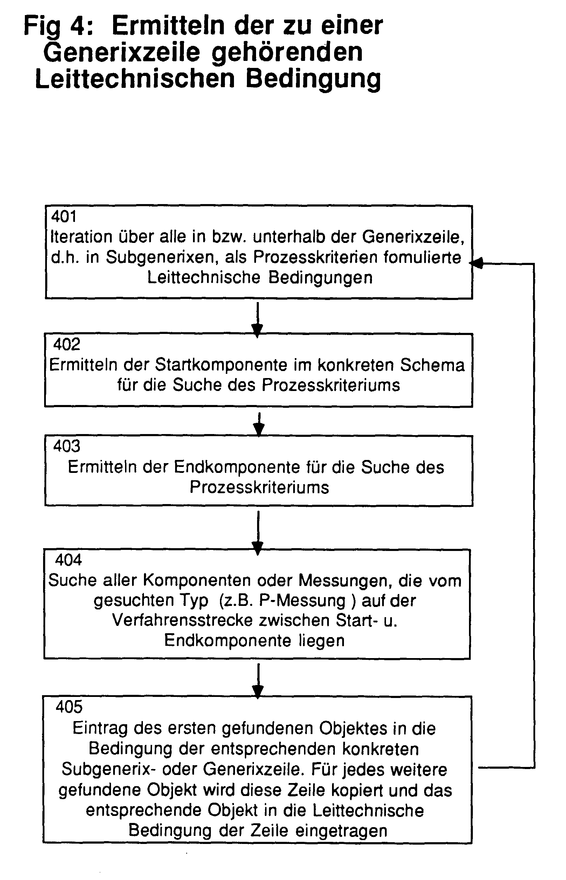

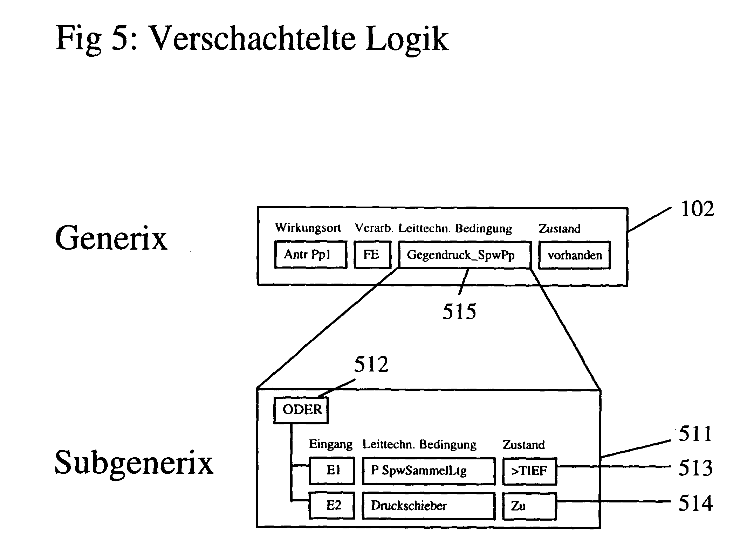

In Schritt 206 wird die leittechnische Bedingung der entsprechenden Generixzeile bearbeitet. Diese Bearbeitung ist in Fig. 4 detaillierter dargestellt. Die leittechnische Bedingung kann als Prozesskriterium oder aber als verschachtelte Logik in Form eines Subgenerixes formuliert sein (vgl. unten, Fig. 5).

Ein Beispiel für ein Prozesskriterium ist in Fig. 1a in der ersten Zeile der konkreten Generixe mit 102 dargestellt. Hier wird als Prozesskriterium der Druck hinter der Pumpe P1 gesucht. In dem in Fig. 4 mit 401 bezeichneten Bearbeitungsschritt wird über alle abstrakt formulierten Prozesskriterien iteriert. In dem mit dem Bezugszeichen 402 versehenen Bearbeitungsschritt wird die Startkomponente der Suchanfrage ermittelt. In der abstrakten Formulierung der Startkomponente ist ein Verweis auf eine Komponente im Verfahrensschema enthalten. Diese Komponente stellt die gesuchte Startkomponente dar. Ist für die Suchanfrage eine Endkomponente vorgesehen, so wird diese in dem mit 302 (Fig. 3) bezeichneten Verarbeitungsschritt nach dem gleichen Verfahren ermittelt, das schon bei der Suchanfrage der Startkomponente verwendet wird. In dem mit 404 bezeichneten Bearbeitungsschritt wird die Verfahrensstrecke zwischen Start und Endkomponente nach Komponenten bzw. Messungen durchsucht, die dem in der Suchanfrage spezifizierten Typ entsprechen, z.B. Druckmessung in Figur 1a (1. Zeile der konkreten Generixe 102). Das gefundene Prozesskriterium wird in dem in Fig. 4 mit 405 bezeichneten Bearbeitungsschritt in die konkrete Zeile, d.h. in die Kopie der entsprechenden abstrakten Zeile eingetragen. Werden mehrere Prozesskriterien gefunden, so wird zu jedem weiteren Prozesskriterium eine konkrete Zeile kopiert und das entsprechende Kriterium eingetragen.

Die leittechnische Bedingung einer Generixzeile kann auch als verschachtelte Logik formuliert sein. Fig. 5 zeigt die Struktur einer verschachtelten Logik, wobei die leittechnische Bedingung ,,Gegendruck SpwPp" 111 in Form eines unterlagerten Subgenerixes 511 mit zwei über einen Oder-Baustein 512 verschalteten Subgenerixzeilen 513, 514 formuliert ist. Die leittechnischen Bedingungen dieser beiden Subgenerixzeilen 513, 514 sind als Prozesskriterien formuliert: "P SpwSammelLtg", "Druckschieber". Diese Prozesskriterien durchlaufen die gleichen Verarbeitungsschritte wie die Prozesskriterien einer Generixzeile. Ist die leittechnische Bedingung einer Subgenerixzeile wiederum über eine verschachtelte Logik formuliert, so wird diese Reihe rekursiv weiterbearbeitet bis die leittechnischen Bedingungen der unterlagerten Subgenerixzeilen nur noch mit Prozesskriterien oder Konstanten formuliert sind. Für die als Prozesskriterien formulierten leittechnischen Bedingungen dieser Subgenerixzeilen werden ebenfalls die gleichen Verarbeitungsschritte durchlaufen wir für die Prozesskriterien einer Generixzeile.

In dem in Fig. 2 mit 207 bezeichneten Bearbeitungsschritt werden die leittechnischen Bedingungen den Verarbeitungen der konkretisierten Wirkungsorte zugeordnet. Solch ein Eingang ist im Abstrakten, s. in Fig. 1a Bezugszeichen 113, bereits definiert. In dem in Fig. 2 mit 208 bezeichneten Bearbeitungsschritt wird die in den vorherigen Verarbeitungsschritten erzeugte konkrete Generixstruktur auf Funktionspläne abgebildet. So werden aus den Verarbeitungen der ermittelten Wirkungsorte Eingänge einer Antriebsfunktion; s. auch Fig. 1a Bezugszeichen 111 und 112, denen die gefundenen Prozesskriterien zugeordnet werden. In Figur 1a, Bezugszeichen 105, wird z.B. das Prozesskriterium "LAB11CP001 Druck hinter Ppe1" mit dem Auslösezustand"> Hoch" der Verarbeitung "FE" des Wirkungsortes "Pumpe 1 LAB10AP001" zugeordnet. Hierbei werden die in den Funktionsplänen aufgeführten Kennzeichnungen direkt aus den gefundenen Messungen bzw. Antrieben entnommen.

## Patentansprüche

1. Verfahren zum automatisierten Generieren von leittechnischen Strukturen für eine konkrete leittechnische Aufgabe unter Einsatz einer Datenverarbeitungseinrichtung und eines darin gespeicherten Expertensystems, wobei
a) aufgesetzt wird auf einem konkreten, hierarchisch in Baugruppen (129) strukturierten verfahrenstechnischen Schema (130) für einen technischen Prozeß oder Teilprozeß, wobei eine Baugruppe (129) wenigstens eine verfahrenstechnische Komponente (z.B. 103) mit Datensätzen zur Beschreibung deren Eigenschaften enthält, und
b) das Expertensystem eine Wissensbasis enthält, die sogenannte abstrakte Generixe (101) aufweist, wobei jedes abstrakte Generix (101) gegliedert ist nach "Wirkungsort" (z.B. Antrieb der Pumpe 1), "Verarbeitung" (z.B. Freigabe zum Einschalten), "leittechnische Bedingung" (z.B. Druckmessung in der Pumpe 1) und "Zustand" (z.B. ein Druckzustand "> Hoch"),
c) die Wissensbasis Anweisungen enthält zum Generieren der leittechnischen Strukturen in Form von Datensätzen, die als konkrete Generixe (102) bezeichnet werden und die - wie die abstrakten Generixe (101) - strukturiert sind nach Wirkungsort (110), Verarbeitung (112), leittechnische Bedingung (111) und Zustand (113), und
d) die leittechnischen Strukturen (also die konkreten Generixe 102) in folgenden Schritten erzeugt werden:
- es werden alle Baugruppen (129) und Komponenten (z.B. 103) des verfahrenstechnischen Schemas (130) ermittelt,
- die abstrakten Generixe (101) werden - für eine anschließende Bearbeitung - zunächst kopiert als konkrete Generixe (102)
- die kopierten Generixe (102) werden zeilenweise bearbeitet, wobei jeweils der Wirkungsort (110) und die leittechnische Bedingung (111) konkretisiert werden, indem auf das den jeweiligen Baugruppen (129) oder Komponenten (z.B. 103) zugeordneten Wissen zugegriffen wird und entsprechend den darin enthaltenen Anweisungen aus dem verfahrenstechnischen Schema (130) der konkrete Wirkungsort (110) und die konkreten leittechnischen Bedingungen (111) aufgesucht werden, und
- durch Iteration über alle Generixzeilen (102) und Baugruppen (129) bzw. Komponenten der vollständige Datensatz der konkreten Generixe (102) erzeugt wird.

2. Verfahren nach Anspruch 1, dadurch gekennzeichnet, daß die leittechnische Bedingung einer Generixzeile in der Struktur einer verschachtelten Logik formuliert ist, wobei beispielsweise die leittechnische Bedingung (z.B. "Gegendruck an der Speisewasserpumpe", 515) in Form eines unterlagerten Subgenerix (511) mit zwei über einen ODER-Baustein (512) verschachtelte Subgenerixzeilen (513, 514) formuliert ist.

3. Verfahren nach Anspruch 1 oder 2, dadurch gekennzeichnet, daß zur Ermittlung der konkreten Wirkungsorte (110) Suchanweisungen verwendet werden, die eine Start- und eine Endkomponente sowie eine Spezifizierung des gesuchten Objektes enthalten.

4. Verfahren nach einem der vorstehenden Ansprüche, dadurch gekennzeichnet, daß die Wirkungsorte (110) einer Generixzeile ermittelt werden durch:
a) Ermitteln der zugehörigen Start- und der Endkomponente im verfahrenstechnischen Schema (130),
b) Suche aller Wirkungsorte, die auf der Verfahrensstrecke zwischen Start- und Endkomponente liegen und vom gesuchten Komponententyp sind,
c) Eintragung des ersten gefundenen Objekts als Wirkungsort (110) der entsprechenden konkreten Generixzeile (102), und
d) Kopieren der Zeile für jedes weitere gefundene Objekt und eintragen des entsprechenden Objekts als Wirkungsort (110).

5. Verfahren nach einem der vorstehenden Ansprüche, dadurch gekennzeichnet, daß als Prozeßkriterien formulierte leittechnische Bedingungen (111) einer Generixzeile ermittelt werden durch:
a) Ermitteln der zugehörigen Start- und der Endkomponente im verfahrenstechnischen Schema (130),
b) Suche aller Komponenten oder Messungen, die auf der Verfahrensstrecke zwischen Start- und Endkomponente liegen und vom gesuchten Komponenten- bzw. Messungstyp sind,
c) Eintragung des ersten gefundenen Objekts in die Bedingung (111) der entsprechenden konkreten Generixzeile (102),
d) Kopieren der Zeile für jedes weitere gefundene Objekt und eintragen des entsprechenden Objekts in die leittechnische Bedingung, wobei
e) die Schritte a) bis d) über alle in bzw. unterhalb der Generixzeile, also in Subgenerixen als Prozeßkriterien formulierte leittechnischen Bedingungen iteriert wird.

6. Verfahren nach einem der vorstehenden Ansprüche, dadurch gekennzeichnet, daß aus den in Form von Datensätzen (konkrete Generix 102) erzeugten leittechnischen Strukturen Funktionspläne (125, 127) abgeleitet werden, indem je Wirkungsort (110) ein Funktionsplan (z.B. 125) angelegt wird und entsprechend der verfahrenstechnischen bzw. funktionellen Merkmale ein Funktionsbaustein (121) abgeleitet wird, danach die leittechnischen Bedingungen (122) nach den Vorgaben für Verarbeitung (124) und Zustand (123) aufgeschaltet werden.

7. Verfahren nach Anspruch 6, dadurch gekennzeichnet, daß als weiterer Schritt Kennzeichnungen, z.B. gemäß Kraftwerkskennzeichnungssystem aus dem verfahrenstechnischen Schema (130) ermittelt und dem im jeweiligen Funktionsplan (125, 127) aufgeführten Wirkungsort zugeordnet werden.

## Claims

1. A method for the automatic generation of process control structures for a concrete process control task by using a data processing device and an expert system stored in the same, whereby
a) a concrete process diagram (130) which is hierarchically structured in modules (129) is used for a technical process or partial process, with a module (129) containing at least one process component (e.g. 103) with data records for the description of its properties, and
b) the expert system contains a knowledge base which is provided with so-called abstract generixes (101), with each abstract generix (101) being structured according to "place of action" (e.g. drive of pump 1"), "processing" (e.g. release for switching on), "process control condition" (e.g. pressure measurement in pump 1) and "state" (e.g. a pressure state ">HIGH"),
c) the knowledge base contains instructions for the generation of the process control structures in form of data records which are designated as concrete generixes (102) and, like the abstract generixes (101), are structured according to place of action (110), processing (112), process control condition (111) and state (113), and
d) the process control structures (i.e. the concrete generixes 102) are generated in the following steps:
- all modules (129) and components (e.g. 103) of the process diagram (130) are determined;
- the abstract generixes (101) are copied at first as concrete generixes (102) for a subsequent processing;
- the copied generixes (102) are processed line by line, with the place of action (110) and the process control condition (111) each being specified by accessing the knowledge associated with the respective modules (129) or components (e.g. 103) and the concrete place of action (110) and the concrete process control conditions (111) are accessed according to the instructions contained therein from the process diagram (130), and
- the complete data record of the concrete generixes (102) is generated by iteration over all generix lines (102) and modules (129) or components.

2. A method as claimed in claim 1, characterised in that the process control condition of a generix line is formulated in the structure of an interleaved logic, with the process control condition (e.g. "back-pressure on the feed water pump", 515) for example being formulated in the form of an underlying subgenerix (511) with two subgenerix lines (513, 514) interleaved through an OR input (512).

3. A method as claimed in claim 1 or 2, characterised in that search instructions are used for determining the concrete places of action (110) which contain a start and end component and a specification of the searched object.

4. A method as claimed in one of the preceding claims, characterised in that the places of action (110) of a generix line are determined by
a)determining the associated start and end components in the process diagram (130);
b)searching all places of action which are situated on the process path between start and end component and are of the searched component type;
c)entering the first found object as a place of action (110) of the respective concrete generix line (102) and
d)copying the line for every further found object and entering the respective object as a place of action (110).

5. A method as claimed in one of the preceding claims, characterised in that the process control conditions (111) of a generix line which are formulated as process criteria are determined by:
a) determining the associated start and end components in the process diagram (130);
b)search for all components or measurements which are disposed on the process path between start and end component and are of the searched type of component or measurement;
c)entry of the first found object into the condition (111) of the corresponding concrete generix line (102);
d)copying of the line for each further found object and entry of the respective object into the process control condition,
e)with the steps a) to d) being iterated over all process control conditions formulated as process criteria in or below the generix line, i.e. in subgenerixes.

6. A method as claimed in one of the preceding claims, characterised in that sequential function charts (125, 127) are derived from the process control structures generated in form of data records (concrete generix 102), in which charts one sequential chart (e.g. 125) is created per place of action (110) and a function module (121) is derived according to the process or functional features, and thereafter the process control conditions (122) are triggered according to the default values for processing (124) and state (123).

7. A method as claimed in claim 6, characterised in that as a further step identifications, e.g. pursuant to the power plant identification system, are determined from the process diagram (130) and are assigned to the place of action mentioned in the respective sequential function chart (125, 127).

## Revendications

1. Procédé de génération automatisée de structures de contrôle-commande en vue d'une tâche concrète de contrôle-commande, utilisant une installation de traitement des données et un système expert stocké dans celle-ci, caractérisé en ce que :
a) on part d'un schéma technique de procédé concret (130) structuré hiérarchiquement en groupes constitutifs (129) pour un process ou une partie de process technique, un groupe (129) contenant au moins une composante technique de procédé (p. ex. 103) avec des ensembles de données décrivant ses propriétés, et
b) le système expert contient une base de connaissances qui présente des matrices de génération abstraites (101), chaque matrice de génération abstraite (101) étant structurée par « point d'application» (p. ex. entraînement de la pompe 1), « traitement » (p. ex. autorisation de démarrage), « condition technique » (p. ex. mesure de la pression dans la pompe 1) et «état» (p. ex. un état de pression « >haut »),
c) la base de connaissance contient des instructions pour la génération des structures de contrôle-commande sous la forme d'ensembles de données, qui sont dénommées matrices de génération concrètes (102) et qui sont structurées, comme les matrices de génération abstraites (101), selon le point d'application (110), le traitement (112), la condition de contrôle-commande (111) et l'état (113) et
d) les structures de contrôle-commande (autrement dit les matrices de génération concrètes 102) sont créées selon les étapes suivantes :
- tous les groupes (129) et composantes (p. ex. 103) du schéma technique de procédé (130) sont déterminés,
- les matrices de génération abstraites (101) sont d'abord copiées sous la forme de matrices de génération concrètes (102) en vue d'un traitement ultérieur,
- les matrices de génération concrètes (102) sont traitées ligne par ligne, le point d'application (110) et la condition de contrôle-commande (111) étant concrétisés en accédant aux connaissances associées aux groupes (129) ou composantes (p. ex. 103) correspondants et le point d'application concret (110) et la condition de contrôle-commande concrète (111) étant recherchés selon les instructions qu'elles contiennent dans le schéma technique de procédé (103), et
- l'ensemble complet des données des matrices de génération concrètes (102) est créé par itération sur toutes les lignes de matrices de génération (102) et tous les groupes (129) ou composantes.

2. Procédé selon la revendication 1, caractérisé en ce que la condition de contrôle-commande d'une ligne de matrice de génération est formulée dans la structure d'une logique imbriquée, la condition de contrôle-commande (p. ex. « contre-pression au niveau de la pompe d'eau alimentaire», 515) étant formulée, par exemple, sous al forme d'une sous-matrice de génération subordonnée (511) avec deux lignes de sous-matrice de génération (513, 514) imbriquées par un composant OU (512).

3. Procédé selon la revendication 1 ou 2, caractérisé en ce que les instructions de recherche utilisées pour déterminer les points d'application concrets (110) contiennent une composante de début et une autre de fin ainsi qu'une spécification de l'objet recherché.

4. Procédé selon l'une quelconque des revendications précédentes, caractérisé en ce que les points d'application (110) d'une ligne de matrice de génération sont déterminés par :
a) détermination des composantes de début et de fin correspondantes dans le schéma technique de procédé (130),
b) recherche de tous les points d'application qui se trouvent sur le segment de procédé compris entre les composantes de début et de fin et qui appartiennent au type de composante recherché,
c) inscription du premier objet trouvé comme point d'application (110) de la ligne de matrice de génération concrète (102) correspondante, et
d) copie de la ligne pour chaque autre objet trouvé et inscription de l'objet correspondant comme point d'application (110).

5. Procédé selon l'une quelconque des revendications précédentes, caractérisé en ce que les conditions de contrôle-commande (111) d'une ligne de matrice de génération formulées comme critères de process sont déterminées par :
a) détermination des composantes de début et de fin correspondantes dans le schéma technique de procédé (130),
b) recherche de toutes les composantes ou mesures qui se trouvent sur le segment de procédé compris entre les composantes de début et de fin et qui appartiennent au type de composante ou de mesure recherché,
c) inscription du premier objet trouvé dans la condition (111) de la ligne de matrice de génération concrète (102) correspondante, et
d) copie de la ligne pour chaque autre objet trouvé et inscription de l'objet correspondant dans la condition de contrôle-commande,
d) les étapes a) à d) étant réitérées pour toutes les conditions de contrôle-commande formulées comme critères de process dans la ligne de matrice de génération ou à un niveau inférieur, c'est-à-dire dans les sous-matrices de génération.

6. Procédé selon l'une quelconque des revendications précédentes, caractérisées en ce que des plans fonctionnels (125, 127) sont dérivés des structures de contrôle-commande créées sous forme d'ensembles de données (matrice de génération concrète 102) en définissant un plan fonctionnel (p. ex. 125) pour chaque point d'application et en dérivant en conséquence les caractéristiques techniques ou fonctionnelles d'un élément fonctionnel (121), après quoi les conditions de contrôle-commande sont intégrées selon les conditions de traitement (124) et d'état (123).

7. Procédé selon la revendication 6, caractérisé en ce que dans une autre étape, des références, par exemple conformes au système de références de la centrale, sont déterminées à partir du schéma technique de procédé (130) et associées au point d'application figurant dans le plan fonctionnel (125, 127) concerné.
